# EUROPEAN PATENT SPECIFICATION

(11) **EP 3 521 591 B1**
(45) Date of publication and mention of the grant of the patent: **28.07.2021**
(21) Application number: 19154304.0
(22) Date of filing: 29.01.2019
(51) Int. Cl.: F02C 7/22, F23R 3/28

(54) **SEGMENTED INTERNAL FUEL MANIFOLD**
SEGMENTIERTER INTERNER KRAFTSTOFFVERTEILER
COLLECTEUR DE CARBURANT INTERNE SEGMENTÉ

(30) Priority: 29.01.2018 US 201815882132
(43) Date of publication of application: 07.08.2019
(73) Proprietor: Pratt & Whitney Canada Corp., Longueuil, Québec J4G 1A1 (CA)
(72) Inventor: MORENKO, Oleg, (01BE5) Longueuil, Québec J4G 1A1 (CA); KOJOVIC, Aleksandar, (01BE5) Longueuil, Québec J4G 1A1 (CA)
(74) Representative: Dehns

(56) References cited:
- GB-A- 2 328 477
- US-A- 2 686 401
- US-A- 5 231 833
- US-A1- 2008 092 545

## Description

### TECHNICAL FIELD

The application relates generally to gas turbine engines and, more particularly, to an internal fuel manifold assembly.

### BACKGROUND OF THE ART

An internal manifold ring mounted inside the gas generator case of a gas turbine engine has proven to be advantageous in terms of system weight and cost reduction. However, the manifold ring cannot be removed for maintenance without dismantling the engine case components from one another to provide access to the interior of the engine, which is a major maintenance operation with its associated costs and time off-wing for the engine.

US 2 686 401 A discloses a fuel manifold for gas turbine power plants, GB 2 328 477 A discloses access to subassemblies of a turbomachine, and US 2008/092545 A1 discloses a gas turbine internal manifold mounting arrangement.

### SUMMARY

In one aspect, there is provided a gas turbine engine in accordance with claim 1 comprising: an engine case having a circumferential wall defining a plenum around a combustor; at least one access port defined in the circumferential wall of the engine case; and a segmented annular fuel manifold mounted inside the engine case in the plenum, the segmented annular fuel manifold having a plurality of manifold ring segments, the manifold ring segments configured to be removable from the plenum via the at least one access port.

In a further embodiment of any of the above, the manifold adapter is mounted to a cover removably mounted over the associated one of the access ports on an outer side of the engine case.

In a further embodiment of any of the above, each of the manifold ring segments is detachably supported at a second end thereof by a support structure projecting inwardly from the engine case.

In a further embodiment of any of the above, the support structure comprises a locating pin detachably mounted to the engine case.

In a still further aspect, there is provided a method of maintaining a gas turbine engine in accordance with the steps defined in claim 12, the gas turbine engine having a segmented fuel manifold mounted inside an engine case, the segmented fuel manifold comprising a plurality of manifold ring segments, the method comprising: disconnecting a first one of the manifold ring segments from a fuel source; opening an access port in a side of the engine case; physically disconnecting the first manifold ring segment from the engine case; and removing the first manifold ring segment from the engine case via the access port.

### DESCRIPTION OF THE DRAWINGS

Reference is now made to the accompanying figures in which:
Fig. 1 is a schematic cross-sectional view of a gas turbine engine having a segmented internal fuel manifold;
Fig. 2 is an isometric view of a fuel manifold assembly including a segmented internal fuel manifold with individually removable manifold ring segments through respective access ports defined in the engine gas generator case;
Fig. 3 is an end view illustrating the manifold ring segments mounted inside the gas generator case of the engine for supplying fuel into the engine combustor;
Figs. 4a and 4b are cross-section views illustrating how a manifold ring segment is first disengaged from the combustor to allow subsequent removal of the manifold ring segment from the gas generator case without having to split the engine; and
Fig. 5 is a further cross-section view illustrating how the manifold ring segment is removed from the gas generator case and pull out of the engine after having been disengaged from the combustor as shown in Figs 4a and 4b.

### DETAILED DESCRIPTION

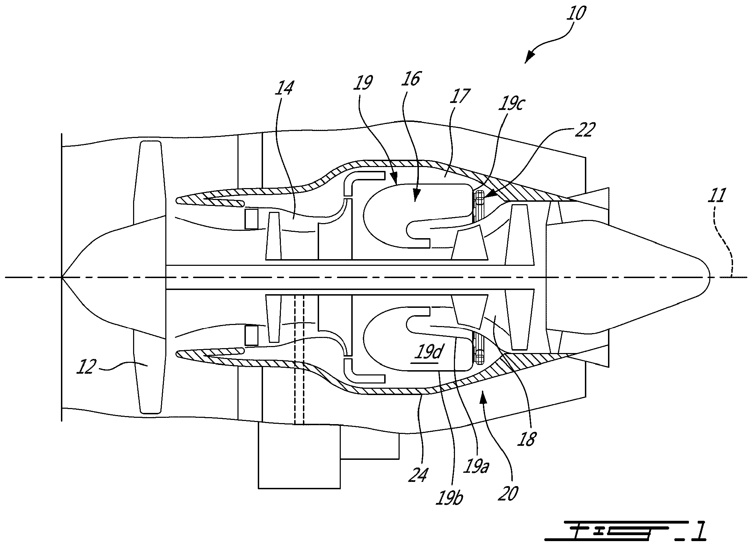

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor section 16 in which the compressed air is mixed with fuel and ignited for generating an annular stream of hot combustion gases, and a turbine section 18 for extracting energy from the combustion gases.

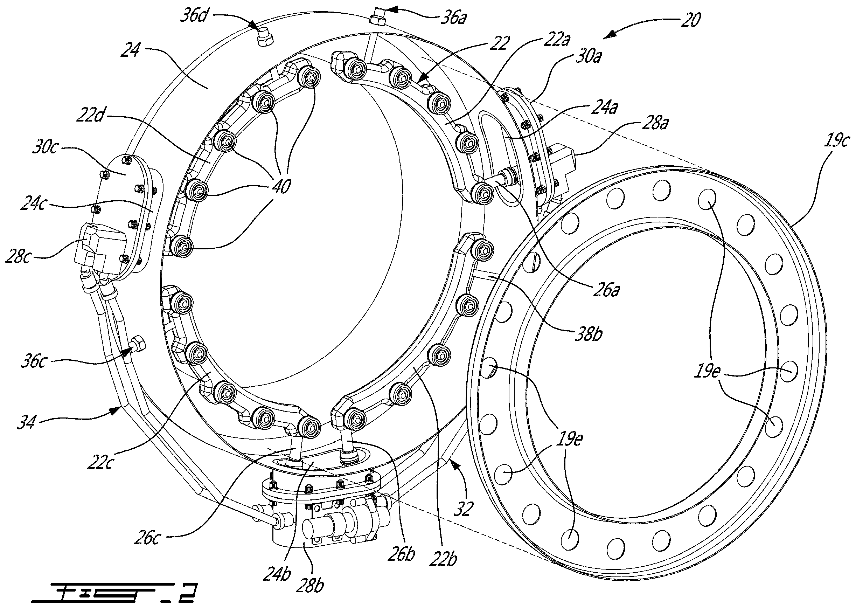

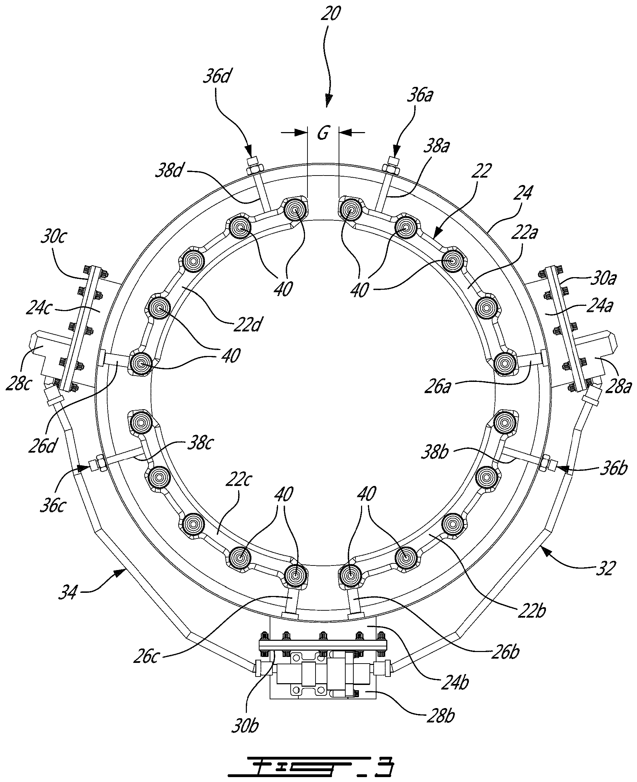

The combustor section 16 comprises a combustor having an annular combustor shell 19 concentrically mounted about the engine central axis 11 in a plenum 17 circumscribed by an engine case including a gas generator case 24 (Figs. 2 and 3) detachably mounted between compressor and turbine casing sections of the engine 10. As can be appreciated from Fig. 1, the plenum 17 is fed with pressurized air from the compressor section 14. The combustor shell 19 includes a radially inner and a radially outer liner 19a, 19b extending axially from a combustor dome 19c to define therewith a combustion chamber 19d. In the illustrated example, the combustor is a reverse-flow combustor. However, it is understood that the combustor could be provided in various forms, including straight flow combustor designs.

The combustor section 16 further comprises a fuel manifold assembly 20 for supplying fuel to the combustor. As can be appreciated from Figs 1-3, the fuel manifold assembly 20 comprises an annular fuel manifold 22 mounted in the plenum 17 inside the gas generator case 24 of the engine 10 adjacent to combustor dome 19c. As will be seen hereinafter, the fuel manifold 22 and the engine case in which it is installed (e.g. the gas generator case 24 in the illustrated example) are configured to allow the internally mounted fuel manifold 22 to be removed (for its replacement or maintenance) without dismantling the engine case components from one another to provide access to the interior of the engine 10.

To that end, internal manifold 22 is segmented. In the illustrated example, the manifold 22 consists of a plurality (4 in the illustrated example) of rigid manifold ring segments 22a, 22b, 22c and 22d circumferentially spaced-apart by inter-segment gaps G. In the illustrated example, the manifold ring segments 22a, 22b, 22c and 22d are detachably mounted to the gas generator case 24 and individually removable from the plenum 17 via associated access ports 24a, 24b 24c (3 in the illustrated example) defined in the gas generator case 24. As shown in Figs. 2, 3 and 5, each of the access ports 24a, 24b, 24c can be provided in the form of a boss protruding outwardly from the gas generator case 24.

According to the example depicted in Figs 2 and 3, the manifold ring segment 22a, which is located in the upper right quadrant of the gas generator case 24, can be installed/removed via port 24a. The manifold ring segments 22b and 22c, which are respectively disposed in the lower right and lower left quadrants of the gas generator case 24 can be installed/removed via the same centrally disposed bottom port 24b. Lastly, manifold ring segment 22d, which is disposed in the upper left quadrant of the gas generator case 24, can be installed/removed via port 24c.

In the illustrated embodiment, the access port 24b is centrally located at the bottom of the gas generator case 24 and access ports 24a, 24c respectively for the right and left upper quadrant manifold segments 22a and 22d are angularly disposed or "clocked" around the circumference of the gas generator case 24 at a same angle from the bottom access port 24b. However, it is understood that various segment and port arrangements are contemplated.

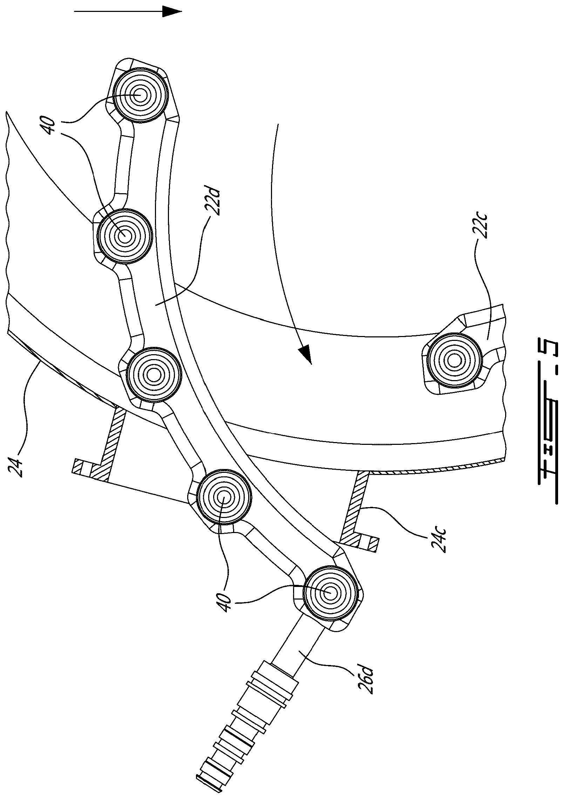

Each access port 24a, 24b, 24c defines an opening which is shaped and size to allow for the passage (insertion or removal) of the associated manifold ring segment. As can be appreciated from Figs 2 and 5, the opening defined by each access port may have an oblong shape configured to allow the associated manifold ring segment 22a, 22b, 22c, 22d to be angularly withdrawn from and inserted into the gas generator case 24 while the gas generator case 24 is assembled to the compressor and turbine casing sections (i.e. without splitting the engine).

As can be appreciated, from Figs. 2 and 3, each of the manifold ring segments 22a, 22b, 22c, 22d is provided at a first end thereof with a fuel inlet tube 26a, 26b, 26c, 26d projecting through the associated access port 24a, 24b, 24c in the gas generator case 24 for connection with an associated manifold adapter 28a, 28b, 28c mounted to a cover plate 30a, 30b, 30c, which is, in turn, detachably mounted to the gas generator case 24 over an associated one of the access ports 24a, 22b, 24c. The cover plates 30a, 30b, 30c can be bolted or otherwise suitably detachably connected to mounting flanges extending about respective mouths of the access ports 24a, 24b, 24c.

The fuel inlet tubes 26a, 26b, 26c, 26d may be brazed or otherwise rigidly connected to the associated manifold ring segments 22a, 22b, 22c , 22d to each form a one-piece of hardware. For instance, metal injection molding (MIM) or additive manufacturing (AM) could be used to form a manifold ring segment with an integral fuel inlet "leg". The fuel inlet tubes 26a, 26b, 26c, 26d are strategically located at one end of the corresponding segments 22a, 22b, 22c, 22d to facilitate the removal thereof through the associated access ports 24a, 24b, 24c. With their respective fuel inlet tubes 26a, 26b, 26c, 26d the manifold ring segments 22a, 22b, 22c, 22d can be individually connected to a common source of fuel, thereby eliminating the need for serially interconnecting the segments in fluid flow communication and, thus, further facilitating the individual removal of the manifold ring segments 22a, 22b, 22c, 22d from the gas generator case 24.

In the illustrated embodiment, the manifold adapters 28a and 28c respectively of manifold ring segments 22a and 22d are fluidly connected to the dual manifold adapter 28b of manifold ring segments 22b, 22c. More particularly, the bottom manifold adapter 28b may have an inlet connected to the source of fuel, first and second outlets respectively connected to manifold segments 22b and 22c, a third outlet connected to fuel adapter 28a of the manifold ring segment 22a via a first external fuel line 30, and a fourth outlet connected to the fuel adapter 28c of the fourth manifold ring segment 22d. It is understood that each fuel line 32, 34 may include primary and secondary fuel conduits, as shown in Fig. 2. Also, each manifold adapters 28a, 28b, 28c could be directly operatively connected to the fuel source. Furthermore, the external fuel system can be designed in such a way that all manifold ring segments 22a, 22b, 22c and 22d are pressurized simultaneously to reduce engine start up time.

Each manifold ring segment 22a, 22b, 22c, 22d is detachably supported at a second end thereof opposite the fuel inlet tube 26a, 26b, 26c, 26d by respective support structures 36a, 36b, 36c, 36d depending radially inwardly from the gas generator case 24. Accordingly, each manifold ring segment 22a, 22b, 22c, 22d has two points of support, a first point of support provided by its fuel inlet tube 26a, 26b, 26c, 26d and a second point of support provided by the support structure 36a, 36b, 36c, 36d. As shown in the illustrated example, each support structure 36a, 36b, 36c, 36d can take the form of a locating pin engageable with attachment point in the second end of the associated manifold ring segment 22a, 22b, 22c, 22d. For instance, the locating pin could be threadably engageable in a corresponding threaded hole at the second end of the manifold segment. The locating pins can be engaged in respective tubular structures 38a, 38b, 38c, 38d provided on the gas generator case 24 at predetermined distance from the access ports 24a, 24b, 24c, 24d. In some applications, the tubular structures can be omitted. The locating pin could be mounted directly to the gas generator case 24. It is understood that other support arrangements are contemplated to detachably mount the manifold ring segments 22a, 22b, 22c, 22d inside the gas generator case 24.

Each of the manifold ring segments 22a, 22b, 22c, 22d may act as a single nozzle that has several injection points. For instance, each of the manifold ring segments 22a, 22b, 22c, 22d may be manufactured in the form of a rigid ring segment having an internal fuel conduit, which may include primary and secondary fuel passages, for feeding a series of injection heads 40 uniformly distributed along the length of the rigid ring segment. The injection heads 40 can, for instance, take the form of nozzle tips brazed in corresponding seats defined in the front face of the ring segment for projecting into corresponding injection holes 19e (Fig. 2) circumferentially distributed in the combustor dome 19c. This configuration allows having various combinations of duplex and simplex fuel injectors in one segment. Usage of MIM or AM technologies allows creating complex segment shapes, which can be optimized for weight and/or cooling purposes.

As compared to a full ring manifold design, the segmented configuration also allows to reduce the fuel "travel" time required to reach the last nozzle tip, thereby reducing heat gain by the fuel inside the manifold 22. This may lead to better fuel manifold and nozzle tip durability.

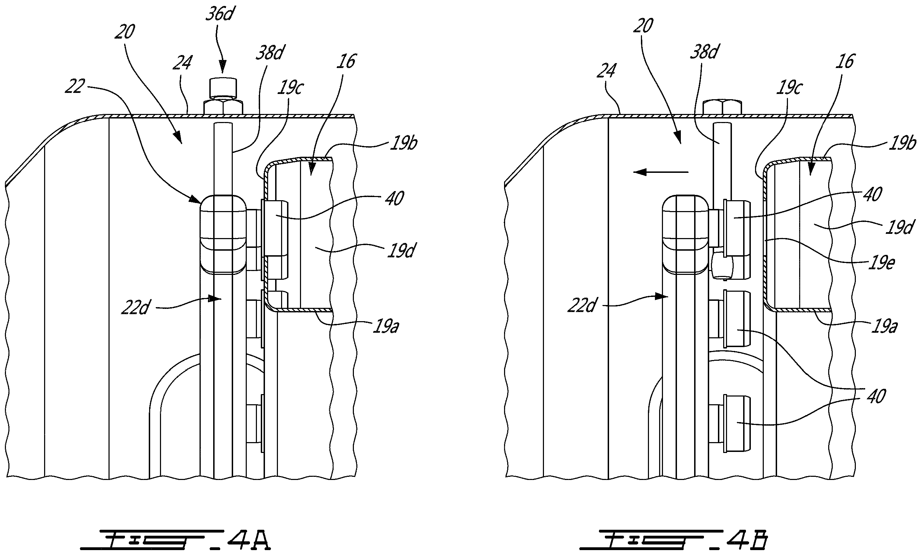

Referring now to Figs. 4a, 4b and 5, there will be described the procedure for servicing the internal fuel manifold and more particularly the procedure for removing one manifold ring segment, the same procedure being followed for each manifold ring segment to be serviced or replaced. First, as shown in Figs. 4a and 4b with respect to manifold ring segment 22d, the first step consist of disengaging the manifold ring segment 22d from the combustor. In order to do so, the fuel inlet tube 26 is disconnected from its adapter 28c and the cover plate 30c covering access port 24c is removed, thereby providing access to the manifold ring segment 22d via access port 24c. The locating pin 36d (or any other support structure used) is uncoupled from the manifold ring segment 22d and pulled out of tubular structure 38d. While holding the manifold ring segment 22d by its fuel inlet tube 26d, the manifold ring segment 22d is axially moved away from the combustor dome 19c by a distance sufficient to move the nozzle tips 40 out of the injection holes 19e, as shown in Fig. 4b. Then, in a second step, the manifold ring segment 22d is removed from the gas generator case 24 via the uncovered access port 24c as shown in Fig. 5. This can be done by pivoting the manifold ring segment 22d so as to generally longitudinally align the segment in the access ports 24c as the same is being pulled out by its inlet end from the gas generator case 24, as depicted in Fig. 5.

Similar procedures are followed for the other manifold ring segments 22a, 22b, 22c. Accordingly, the internal fuel manifold 22 can be completely removed and replaced either with new segments or repaired segments without splitting the engine. This simplifies the maintenance procedures and reduces the time required for the maintenance of an internal fuel manifold.

According to one aspect, the present disclosure provide for a method for facilitating maintenance of an internal fuel manifold mounted inside a gas generator case of a gas turbine engine. The method comprises segmenting the internal fuel manifold into manifold ring segments; and providing access ports in the gas generator case, the access ports being configured to permit removal of the manifold ring segments from the gas generator case without splitting the engine. The fuel inlet of each segment may be strategically located closer to one end of the segment to facilitate removal of the segment. The ability of removing the segments without splitting the engine facilitates the maintenance of internal manifolds.

The above description is meant to be exemplary only, and one skilled in the art will recognize that changes may be made to the embodiments described without departing from the scope of the invention disclosed. For instance, the number of access ports can vary depending on the applications. It might be possible to have a single access port. All the segments could be removed via the same port. Also, more than one segment could potentially be removed at a time from the same access port. According to another embodiment, at least some of the segments could be fluidly connected to one another. Also one fuel adapter could be used to feed all segments. Furthermore, the number of segments and number/type of nozzle tips for each segment may vary. Lastly, the sequence of fuel delivery for each segment may vary depending on the requirements of each application. Modifications which fall within the scope of the present invention as defined by the appended claims will be apparent to those skilled in the art, in light of a review of this disclosure.

## Claims

1. A gas turbine engine (10) comprising:
an engine case (24) having a circumferential wall defining a plenum (17) around a combustor (16), and at least one access port (24a, 24b, 24c) defined in the circumferential wall of the engine case (24); and
a segmented annular fuel manifold (22) mounted inside the engine case (24) and in the plenum (17), the segmented annular fuel manifold (22) having a plurality of manifold ring segments (22a, 22b, 22c, 22d), the manifold ring segments (22a...22d) configured to be removable from the plenum (17) via the at least one access port (24a, 24b, 24c).

2. The gas turbine engine (10) defined in claim 1, wherein the manifold ring segments (22a...22d) are individually removable from the at least one access port (24a, 24b, 24c).

3. The gas turbine engine (10) defined in claim 1 or 2, wherein the manifold ring segments (22a...22d) are separately connected to a source of fuel.

4. The gas turbine engine (10) defined in claim 1, 2 or 3, wherein the at least one access port (24a, 24b, 24c) comprises a plurality of access ports (24a, 24b, 24c) distributed around a circumference of the circumferential wall of the engine case (24), and the plurality of manifold ring segments (22a...22d) are provided at a first end thereof with a fuel inlet tube (26a, 26b, 26c, 26d) projecting through an associated one of the plurality of access ports (24a, 24b, 24c) for connection to a or the source of fuel.

5. The gas turbine engine (10) defined in any preceding claim, wherein the plurality of manifold ring segments (22a...22d) are detachably supported at a second end thereof by a locating pin (36a, 36b, 36c, 36d) mounted to the engine case (24).

6. The gas turbine engine (10) defined in any of claims 1 to 4, wherein each of the manifold ring segments (22a...22d) is detachably supported at a second end thereof by a support structure (36a, 36b, 36c, 36d) projecting inwardly from the engine case (24).

7. The gas turbine engine (10) defined in claim 6, wherein the support structure (36a...36d) comprises a locating pin (36a...36d) detachably mounted to the engine case (24).

8. The gas turbine engine (10) defined in any preceding claim, further comprising at least one fuel adapter (28a, 28b, 28c) mounted to the at least one access port (24a, 24b, 24c), the at least one fuel adapter (28a, 28b, 28c) configured to connect the segmented annular fuel manifold (22) to a or the fuel source.

9. The gas turbine engine (10) defined in claim 8, wherein the at least one access port (24a, 24b, 24c) comprises at least two circumferentially spaced-part access ports (24a, 24b, 24c), and the at least one fuel adapter (28a, 28b, 28c) comprises at least two fuel adapters (28a, 28b, 28c), the at least two fuel adapters (28a, 28b, 28c) each being operatively connected to different ones of said plurality of manifold ring segments (22a...22d).

10. The gas turbine engine (10) defined in any preceding claim, wherein the at least one access port (24a...24c) comprises a or the plurality of access ports (24a, 24b, 24c), and the plurality of access ports (24a, 24b, 24c) are closed by respective removable covers (30a, 30b, 30c) to which fuel adapters (28a, 28b, 28c) are mounted to individually connect the manifold ring segments (22a...22d) to a common fuel source.

11. The gas turbine engine (10) defined in any preceding claim, wherein at least one of the plurality of manifold ring segments (22a...22d) has a plurality of fluidly interconnected nozzle tips (40) distributed along a length thereof.

12. A method of maintaining a gas turbine engine (10) having a segmented fuel manifold (22) mounted inside an engine case (24), the segmented fuel manifold (22) comprising a plurality of manifold ring segments (22a, 22b, 22c, 22d), the method comprising:
disconnecting a first one of the manifold ring segments (22a...22d) from a fuel source;
opening an access port (24a, 24b, 24c) in a side of the engine case (24);
physically disconnecting the first manifold ring segment (22a...22d) from the engine case (24); and
removing the first manifold ring segment (22a...22d) from the engine case (24) via the access port (24a, 24b, 24c).

13. The method defined in claim 12, wherein physically disconnecting comprises detaching a locating pin (36a, 36b, 36c, 36d) from the first manifold ring (22a...22d).

14. The method defined in claim 12 or 13, wherein disconnecting the first one of the manifold ring segments (22a...22d) from a fuel source comprises disconnecting a fuel inlet tube (26a, 26b, 26c, 26d) of the first manifold ring segment (22a...22d) from a fuel adaptor (28a, 28b, 28c) mounted outside of the engine case (24).

15. The method defined in any of claims 12 to 14, further comprising replacing the first manifold ring segment (22a...22d) within the engine case (24) via the access port (24a, 24b, 24c), the first manifold ring segment (22a...22d) being new or repaired.

## Patentansprüche

1. Gasturbinentriebwerk (10), umfassend:
ein Triebwerksgehäuse (24) mit einer Umfangswand, die einen Sammelraum (17) um eine Brennkammer (16) herum definiert, und mindestens einem Zugangsanschluss (24a, 24b, 24c), der in der Umfangswand des Triebwerksgehäuses (24) definiert ist; und
einen segmentierten ringförmigen Kraftstoffverteiler (22), der innerhalb des Triebwerksgehäuses (24) und in dem Sammelraum (17) montiert ist, wobei der segmentierte ringförmige Kraftstoffverteiler (22) eine Vielzahl von Verteilerringsegmenten (22a, 22b, 22c, 22d) aufweist, wobei die Verteilerringsegmente (22a...22d) dazu konfiguriert sind, über den mindestens einen Zugangsanschluss (24a, 24b, 24c) aus dem Sammelraum (17) entfernbar zu sein.

2. Gasturbinentriebwerk (10) nach Anspruch 1, wobei die Verteilerringsegmente (22a...22d) einzeln aus dem mindestens einen Zugangsanschluss (24a, 24b, 24c) entfernbar sind.

3. Gasturbinentriebwerk (10) nach Anspruch 1 oder 2, wobei die Verteilerringsegmente (22a...22d) getrennt mit einer Kraftstoffquelle verbunden sind.

4. Gasturbinentriebwerk (10) nach Anspruch 1, 2 oder 3, wobei der mindestens eine Zugangsanschluss (24a, 24b, 24c) eine Vielzahl von Zugangsanschlüssen (24a, 24b, 24c) umfasst, die um einen Umfang der Umfangswand des Triebwerksgehäuses (24) herum verteilt ist, und die Vielzahl von Verteilerringsegmenten (22a...22d) an einem ersten Ende von dieser mit einem Kraftstoffeinlassrohr (26a, 26b, 26c, 26d) bereitgestellt ist, das durch einen zugehörigen der Vielzahl von Zugangsanschlüssen (24a, 24b, 24c) zur Verbindung mit einer oder der Kraftstoffquelle ragt.

5. Gasturbinentriebwerk (10) nach einem der vorhergehenden Ansprüche, wobei die Vielzahl von Verteilerringsegmenten (22a...22d) an einem zweiten Ende von dieser durch einen Fixierstift (36a, 36b, 36c, 36d), der an das Triebwerksgehäuse (24) montiert ist, lösbar gehalten wird.

6. Gasturbinentriebwerk (10) nach einem der Ansprüche 1 bis 4, wobei jedes der Verteilerringsegmente (22a...22d) an einem zweiten Ende von dieser durch eine Stützstruktur (36a, 36b, 36c, 36d), die von dem Triebwerksgehäuse (24) nach innen ragt, lösbar gehalten wird.

7. Gasturbinentriebwerk (10) nach Anspruch 6, wobei die Stützstruktur (36a...36d) einen Fixierstift (36a...36d) umfasst, der lösbar an das Triebwerksgehäuse (24) montiert ist.

8. Gasturbinentriebwerk (10) nach einem der vorhergehenden Ansprüche, ferner umfassend mindestens einen Kraftstoffadapter (28a, 28b, 28c), der an den mindestens einen Zugangsanschluss (24a, 24b, 24c) montiert ist, wobei der mindestens eine Kraftstoffadapter (28a, 28b, 28c) dazu konfiguriert ist, den segmentierten ringförmigen Kraftstoffverteiler (22) mit einer oder der Kraftstoffquelle zu verbinden.

9. Gasturbinentriebwerk (10) nach Anspruch 8, wobei der mindestens eine Zugangsanschluss (24a, 24b, 24c) mindestens zwei in Umfangsrichtung beabstandete Zugangsanschlüsse (24a, 24b, 24c) umfasst und der mindestens eine Kraftstoffadapter (28a, 28b, 28c) mindestens zwei Kraftstoffadapter (28a, 28b, 28c) umfasst, wobei die mindestens zwei Kraftstoffadapter (28a, 28b, 28c) jeweils mit anderen der Vielzahl von Verteilerringsegmenten (22a...22d) wirkverbunden sind.

10. Gasturbinentriebwerk (10) nach einem der vorhergehenden Ansprüche, wobei der mindestens eine Zugangsanschluss (24a...24c) eine oder die Vielzahl von Zugangsanschlüssen (24a, 24b, 24c) umfasst und die Vielzahl von Zugangsanschlüssen (24a, 24b, 24c) durch entsprechende abnehmbare Abdeckungen (30a, 30b, 30c) geschlossen ist, an welche Kraftstoffadapter (28a, 28b, 28c) montiert sind, um die Verteilerringsegmente (22a...22d) einzeln mit einer gemeinsamen Kraftstoffquelle zu verbinden.

11. Gasturbinentriebwerk (10) nach einem der vorhergehenden Ansprüche, wobei das mindestens eine der Vielzahl von Verteilerringsegmenten (22a...22d) eine Vielzahl von fluidisch miteinander verbundenen Düsenspitzen (40) aufweist, die entlang einer Länge von dieser angeordnet sind.

12. Verfahren zur Erhaltung eines Gasturbinentriebwerks (10) mit einem segmentierten Kraftstoffverteiler (22), der innerhalb eines Triebwerksgehäuses (24) montiert ist, wobei der segmentierte Kraftstoffverteiler (22) eine Vielzahl von Verteilerringsegmenten (22a, 22b, 22c, 22d) umfasst, wobei das Verfahren Folgendes umfasst:
Trennen eines ersten der Verteilerringsegmente (22a...22d) von einer Kraftstoffquelle;
Öffnen eines Zugangsanschlusses (24a, 24b, 24c) auf einer Seite des Triebwerksgehäuses (24);
physisches Trennen des ersten Verteilerringsegments (22a...22d) von dem Triebwerksgehäuse (24); und
Entfernen des ersten Verteilerringsegments (22a...22d) über den Zugangsanschluss (24a, 24b, 24c) von dem Triebwerksgehäuse (24) .

13. Verfahren nach Anspruch 12, wobei ein physisches Trennen das Lösen des Fixierstifts (36a, 36b, 36c, 36d) von dem ersten Verteilerring (22a...22d) umfasst.

14. Verfahren nach Anspruch 12 oder 13, wobei ein Trennen des ersten der Verteilerringsegmente (22a...22d) von einer Kraftstoffquelle das Trennen eines Kraftstoffeinlassrohres (26a, 26b, 26c, 26d) des ersten Verteilerringsegments (22a...22d) von einem Kraftstoffadapter (28a, 28b, 28c), der außerhalb des Triebwerksgehäuses (24) montiert ist, umfasst.

15. Verfahren nach einem der Ansprüche 12 bis 14, ferner umfassend ein Austauschen des ersten Verteilerringsegments (22a...22d) innerhalb des Triebwerksgehäuses (24) über den Zugangsanschluss (24a, 24b, 24c), wobei das erste Verteilerringsegment (22a...22d) neu oder repariert ist.

## Revendications

1. Moteur à turbine à gaz (10) comprenant :
un carter de moteur (24) ayant une paroi circonférentielle définissant un plénum (17) autour d'un dispositif de combustion (16), et au moins un orifice d'accès (24a, 24b, 24c) défini dans la paroi circonférentielle du carter de moteur (24) ; et
un collecteur de carburant annulaire segmenté (22) monté à l'intérieur du carter de moteur (24) et dans le plénum (17), le collecteur de carburant annulaire segmenté (22) ayant une pluralité de segments de bague collectrice (22a, 22b, 22c, 22d), les segments de bague collectrice (22a...22d) étant conçus pour pouvoir être retirés du plénum (17) par l'intermédiaire de l'au moins un orifice d'accès (24a, 24b, 24c).

2. Moteur à turbine à gaz (10) selon la revendication 1, dans lequel les segments de bague collectrice (22a...22d) peuvent être retirés individuellement de l'au moins un orifice d'accès (24a, 24b, 24c).

3. Moteur à turbine à gaz (10) selon la revendication 1 ou 2, dans lequel les segments de bague collectrice (22a...22d) sont reliés séparément à une source de carburant.

4. Moteur à turbine à gaz (10) selon la revendication 1, 2 ou 3, dans lequel l'au moins un orifice d'accès (24a, 24b, 24c) comprend une pluralité d'orifices d'accès (24a, 24b, 24c) répartis autour d'une circonférence de la paroi circonférentielle du carter de moteur (24), et la pluralité de segments de bague collectrice (22a...22d) sont pourvus, à une première extrémité de ceux-ci, d'un tube d'admission de carburant (26a, 26b, 26c, 26d) faisant saillie à travers un orifice d'accès associé parmi la pluralité d'orifices d'accès (24a, 24b, 24c) à relier à une ou à la source de carburant.

5. Moteur à turbine à gaz (10) selon une quelconque revendication précédente, dans lequel la pluralité de segments de bague collectrice (22a...22d) sont soutenus de manière amovible, à une seconde extrémité de ceux-ci, par une goupille de positionnement (36a, 36b, 36c, 36d) montée sur le carter de moteur (24).

6. Moteur à turbine à gaz (10) selon l'une quelconque des revendications 1 à 4, dans lequel chacun des segments de bague collectrice (22a...22d) est soutenu de manière amovible, à une seconde extrémité de ceux-ci, par une structure de soutien (36a, 36b, 36c, 36d) faisant saillie vers l'intérieur à partir du carter de moteur (24).

7. Moteur à turbine à gaz (10) selon la revendication 6, dans lequel la structure de soutien (36a...36d) comprend une goupille de positionnement (36a...36d) montée de manière amovible sur le carter de moteur (24).

8. Moteur à turbine à gaz (10) selon une quelconque revendication précédente, comprenant en outre au moins un raccord de carburant (28a, 28b, 28c) monté sur l'au moins un orifice d'accès (24a, 24b, 24c), l'au moins un raccord de carburant (28a, 28b, 28c) étant conçu pour relier le collecteur de carburant annulaire segmenté (22) à une ou à la source de carburant.

9. Moteur à turbine à gaz (10) selon la revendication 8, dans lequel l'au moins un orifice d'accès (24a, 24b, 24c) comprend au moins deux orifices d'accès espacés circonférentiellement (24a, 24b, 24c), et l'au moins un raccord de carburant (28a, 28b, 28c) comprend au moins deux raccords de carburant (28a, 28b, 28c), les au moins deux raccords de carburant (28a, 28b, 28c) étant reliés chacun de manière opérationnelle à des segments de bague collectrice différents parmi ladite pluralité de segments de bague collectrice (22a...22d).

10. Moteur à turbine à gaz (10) selon une quelconque revendication précédente, dans lequel l'au moins un orifice d'accès (24a...24c) comprend un orifice d'accès ou la pluralité d'orifices d'accès (24a, 24b, 24c), et la pluralité d'orifices d'accès (24a, 24b, 24c) sont fermés par des couvercles amovibles (30a, 30b, 30c) respectifs sur lesquels des raccords de carburant (28a, 28b, 28c) sont montés pour relier individuellement les segments de bague collectrice (22a...22d) à une source de carburant commune.

11. Moteur à turbine à gaz (10) selon une quelconque revendication précédente, dans lequel au moins l'un parmi la pluralité de segments de bague collectrice (22a...22d) a une pluralité d'embouts de buse reliés entre eux fluidiquement (40) répartis le long de sa longueur.

12. Procédé de maintien d'un moteur à turbine à gaz (10) ayant un collecteur de carburant segmenté (22) monté à l'intérieur d'un carter de moteur (24), le collecteur de carburant segmenté (22) comprenant une pluralité de segments de bague collectrice (22a, 22b, 22c, 22d), le procédé comprenant :
la déconnexion d'un premier des segments de bague collectrice (22a...22d) d'une source de carburant ;
l'ouverture d'un orifice d'accès (24a, 24b, 24c) dans un côté du carter de moteur (24) ;
la déconnexion physique du premier segment de bague collectrice (22a...22d) du carter de moteur (24) ; et
le retrait du premier segment de bague collectrice (22a...22d) du carter de moteur (24) par l'intermédiaire de l'orifice d'accès (24a, 24b, 24c).

13. Procédé selon la revendication 12, dans lequel la déconnexion physique comprend le détachement d'une goupille de positionnement (36a, 36b, 36c, 36d) de la première bague collectrice (22a...22d).

14. Procédé selon la revendication 12 ou 13, dans lequel la déconnexion du premier des segments de bague collectrice (22a...22d) d'une source de carburant comprend la déconnexion d'un tube d'admission de carburant (26a, 26b, 26c, 26d) du premier segment de bague collectrice (22a...22d) d'un raccord de carburant (28a, 28b, 28c) monté à l'extérieur du carter de moteur (24).

15. Procédé selon l'une quelconque des revendications 12 à 14, comprenant en outre le remplacement du premier segment de bague collectrice (22a...22d) à l'intérieur du carter de moteur (24) par l'intermédiaire de l'orifice d'accès (24a, 24b, 24c), le premier segment de bague collectrice (22a...22d) étant neuf ou réparé.
